# EUROPEAN PATENT APPLICATION

(11) **EP 4 523 963 A1**
(43) Date of publication of application: **19.03.2025**
(21) Application number: 23803640.4
(22) Date of filing: 12.05.2023
(51) Int. Cl.: B60N 2/90, B60N 2/06

(54) **VEHICLE SEAT**

(30) Priority: 13.05.2022 US 202263364641 P
(71) Applicant: TS Tech Co., Ltd., Asaka-shi, Saitama 351-0012 (JP)
(72) Inventor: OSBORNE Jon, Reynoldsburg, Ohio 43068 (US)
(74) Representative: Dehns
(86) International application number: PCT/JP2023/017960
(87) International publication number: WO 2023/219166

(57) **Abstract**

TASK

To provide a vehicle seat having a seat main body that can be attached to and detached from an upper rail which simplifies the work load of detaching and attaching the seat main body.

SOLUTION

The vehicle seat (1) comprises a slide device (13) including a lower rail (10) provided on a floor (2) and an upper rail (12) slidably supported by the lower rail, a seat main body (5) removably connected to the slide device via a connecting device (4), an electric device (80) provided on the seat main body, a rail-side connector (81A) provided on an upper surface of the upper rail and connected to a power source (8), a seat-side connector (81B) provided on a lower surface of the seat main body and connected to the electric device, the rail-side connector and the seat-side connector being configured to be electrically connected to each other when the seat main body is connected to the upper rail.

## Description

### TECHNICAL FIELD

The present invention relates to a vehicle seat.

### BACKGROUND ART

Patent Document 1 discloses a vehicle seat including a lower rail provided on a floor, an upper rail slidably provided on the lower rail, a pair of brackets each having a striker and connected to the upper rail, and a seat main body fitted with a pair of connecting devices detachably engaging the corresponding strikers. The seat main body is thus removable from the upper rail.

### PRIOR ART DOCUMENT(S)

### PATENT DOCUMENT(S)

Patent Document 1: DE102005022984A1

### SUMMARY OF THE INVENTION

### TASK TO BE ACCOMPLISHED BY THE INVENTION

When the seat main body is equipped with electric devices, removal of the seat main body from the upper rail necessitates the electric devices to be disconnected from the vehicle power source. Therefore, there is a problem that the work load of attaching and detaching the seat main body to and from the upper rail is relatively large.

In view of such a problem of the prior art, an object of the present invention is to provide a vehicle seat having a seat main body that can be attached to and detached from an upper rail which simplifies the work load of detaching and attaching the seat main body.

### MEANS TO ACCOMPLISH THE TASK

To achieve such an object, an aspect of the present invention provides a vehicle seat (1), comprising: a slide device (13) including a lower rail (10) provided on a floor (2) and an upper rail (12) slidably supported by the lower rail; a seat main body (5) removably connected to the slide device via a connecting device (4); an electric device (80) provided on the seat main body; a rail-side connector (81A) provided on an upper surface of the upper rail and connected to a power source (8); and a seat-side connector (81B) provided on a lower surface of the seat main body and connected to the electric device, the rail-side connector and the seat-side connector being configured to be electrically connected to each other when the seat main body is connected to the upper rail.

According to this aspect, connecting the seat main body to the upper rail causes the rail-side connector and the seat-side connector to be electrically connected to each other so that the operator is not required to connect the electric device to the power source. Therefore, in a vehicle seat in which the seat main body can be attached to and detached from the upper rail, the work of attaching and detaching the seat main body can be facilitated.

In the above aspect, preferably, the upper rail is provided with a pair of strikers (37) at either end in a longitudinal direction thereof, and the connecting device is provided as a pair so as to correspond to the strikers, the rail-side connector being positioned between the strikers (37), the seat-side connector being positioned between the connecting devices.

According to this aspect, since the rail-side connector and the seat-side connector are positioned between the pair of strikers and between the pair of connecting devices, respectively, that are configured to be connected to each other, the rail-side connector and the seat-side connector can be reliably connected to each other.

In the above aspect, preferably, the rail-side connector includes a plurality of electrically conductive plates (84) arranged in the longitudinal direction on an upper surface of the upper rail, and the seat-side connector is provided with a plurality of conductive probes (90) so as to contact the corresponding conductive plates.

According to this aspect, when the seat main body is attached to the upper rail, the seat-side connector and the rail-side connector are connected to each other in a reliable manner.

In the above aspect, preferably, the seat-side connector is provided with a plurality of biasing members (93) that bias the conductive probes toward the rail-side connector.

According to this aspect, the seat-side connector and the rail-side connector are connected to each other in a particularly reliable manner.

In the above aspect, preferably, each conductive plate has an area which is larger than an area of a contact portion of the corresponding conductive probe when viewed from above.

According to this aspect, even if there are manufacturing errors in the component members, the seat-side connector and the rail-side connector can be connected to each other in a reliable manner.

In the above aspect, preferably, the upper rail is provided with a top wall (26) facing vertically and extending in the longitudinal direction thereof, and a pair of side walls (27) that extend downward from either side edge of the top wall, a screw shaft (43A, 43B) is rotatably supported under the top wall, an electric motor (40) for rotating the screw shaft is supported under the top wall, a plurality of engagement holes (22) meshing with the screw shaft are formed in the lower rail along a longitudinal direction thereof, and at least one of the conductive plates is positioned so as to overlap with at least one of the screw shaft and the electric motor when viewed from above.

According to this aspect, the rail-side connector, screw shaft, and electric motor can be arranged on the upper rail with favorable space efficiency.

In the above aspect, preferably, each striker is connected to both of the side walls, and the top wall is provided with a pair of receiving holes (36) so as to correspond to the strikers, respectively, so that each connecting device can be connected to the corresponding striker by passing through the corresponding receiving hole.

According to this aspect, the rigidity of the upper rail can be improved by the strikers. Furthermore, since the strikers are positioned under the top wall of the upper rail, the gap between the seat main body and the floor can be minimized.

In the above aspect, preferably, the upper rail is provided with an electrically insulating lower partition wall (86) so as to surround the rail-side connector.

According to this aspect, since the lower partition wall conceals the connecting portions between the rail-side connector and the seat-side connector, contact between foreign objects and the connecting portions can be avoided.

In the above aspect, preferably, the seat-side connector is provided with an electrically insulating upper partition wall (96) surrounding the conductive probes.

According to this aspect, since the upper partition wall conceals the connecting portions between the rail-side connector and the seat-side connector, contact between foreign objects and the connecting portions can be avoided.

In the above aspect, preferably, a support member that supports the screw shaft is connected to a lower surface of the top wall, and the support member is in contact with the side walls.

According to this aspect, the rigidity of the upper rail can be improved.

### EFFECT OF THE INVENTION

To achieve such an object, an aspect of the present invention provides a vehicle seat (1), comprising: a slide device (13) including a lower rail (10) provided on a floor (2) and an upper rail (12) slidably supported by the lower rail; a seat main body (5) removably connected to the slide device via a connecting device (4); an electric device (80) provided on the seat main body; a rail-side connector (81A) provided on an upper surface of the upper rail and connected to a power source (8); and a seat-side connector (81B) provided on a lower surface of the seat main body and connected to the electric device, the rail-side connector and the seat-side connector being configured to be electrically connected to each other when the seat main body is connected to the upper rail.

According to this aspect, connecting the seat main body to the upper rail causes the rail-side connector and the seat-side connector to be electrically connected to each other so that the operator is not required to connect the electric device to the power source. Therefore, in a vehicle seat in which the seat main body can be attached to and detached from the upper rail, the work of attaching and detaching the seat main body can be facilitated.

In the above aspect, preferably, the upper rail is provided with a pair of strikers (37) at either end in a longitudinal direction thereof, and the connecting device is provided as a pair so as to correspond to the strikers, the rail-side connector being positioned between the strikers (37), the seat-side connector being positioned between the connecting devices.

According to this aspect, since the rail-side connector and the seat-side connector are positioned between the pair of strikers and between the pair of connecting devices, respectively, that are configured to be connected to each other, the rail-side connector and the seat-side connector can be reliably connected to each other.

In the above aspect, preferably, the rail-side connector includes a plurality of electrically conductive plates (84) arranged in the longitudinal direction on an upper surface of the upper rail, and the seat-side connector is provided with a plurality of conductive probes (90) so as to contact the corresponding conductive plates.

According to this aspect, when the seat main body is attached to the upper rail, the seat-side connector and the rail-side connector are connected to each other in a reliable manner.

In the above aspect, preferably, the seat-side connector is provided with a plurality of biasing members (93) that bias the conductive probes toward the rail-side connector.

According to this aspect, the seat-side connector and the rail-side connector are connected to each other in a particularly reliable manner.

In the above aspect, preferably, each conductive plate has an area which is larger than an area of a contact portion of the corresponding conductive probe when viewed from above.

According to this aspect, even if there are manufacturing errors in the component members, the seat-side connector and the rail-side connector can be connected to each other in a reliable manner.

In the above aspect, preferably, the upper rail is provided with a top wall (26) facing vertically and extending in the longitudinal direction thereof, and a pair of side walls (27) that extend downward from either side edge of the top wall, a screw shaft (43A, 43B) is rotatably supported under the top wall, an electric motor (40) for rotating the screw shaft is supported under the top wall, a plurality of engagement holes (22) meshing with the screw shaft are formed in the lower rail along a longitudinal direction thereof, and at least one of the conductive plates is positioned so as to overlap with at least one of the screw shaft and the electric motor when viewed from above.

According to this aspect, the rail-side connector, screw shaft, and electric motor can be arranged on the upper rail with favorable space efficiency.

In the above aspect, preferably, each striker is connected to both of the side walls, and the top wall is provided with a pair of receiving holes (36) so as to correspond to the strikers, respectively, so that each connecting device can be connected to the corresponding striker by passing through the corresponding receiving hole.

According to this aspect, the rigidity of the upper rail can be improved by the strikers. Furthermore, since the strikers are positioned under the top wall of the upper rail, the gap between the seat main body and the floor can be minimized.

In the above aspect, preferably, the upper rail is provided with an electrically insulating lower partition wall (86) so as to surround the rail-side connector.

According to this aspect, since the lower partition wall conceals the connecting portions between the rail-side connector and the seat-side connector, contact between foreign objects and the connecting portions can be avoided.

In the above aspect, preferably, the seat-side connector is provided with an electrically insulating upper partition wall (96) surrounding the conductive probes.

According to this aspect, since the upper partition wall conceals the connecting portions between the rail-side connector and the seat-side connector, contact between foreign objects and the connecting portions can be avoided.

In the above aspect, preferably, a support member that supports the screw shaft is connected to a lower surface of the top wall, and the support member is in contact with the side walls.

According to this aspect, the rigidity of the upper rail can be improved.

### BRIEF DESCRIPTION OF THE DRAWINGS

FIG. 1 is a side view of a seat according to an embodiment of the present invention;
FIG. 2 is a perspective view of a slide device;
FIG. 3 is a sectional front view of a lower rail;
FIG. 4 is a sectional front view of the slide device;
FIG. 5 is a perspective view of the slide device:
FIG. 6 is a sectional side view of a main part of the seat;
FIG. 7 is a sectional side view of a connector (an enlarged view of FIG. 6);
FIG. 8 is a perspective view of a screw shaft; and
FIG. 9 is a perspective view of a slide device according to a modified embodiment of the present invention.

### DETAILED DESCRIPTION OF THE PREFERRED EMBODIMENT(S)

A vehicle seat as applied to a seat of an automobile according to an embodiment of the present invention will be described in the following with reference to the appended drawings. Hereinafter, the front and rear, left and right, and up and down directions will be defined with respect to the vehicle.

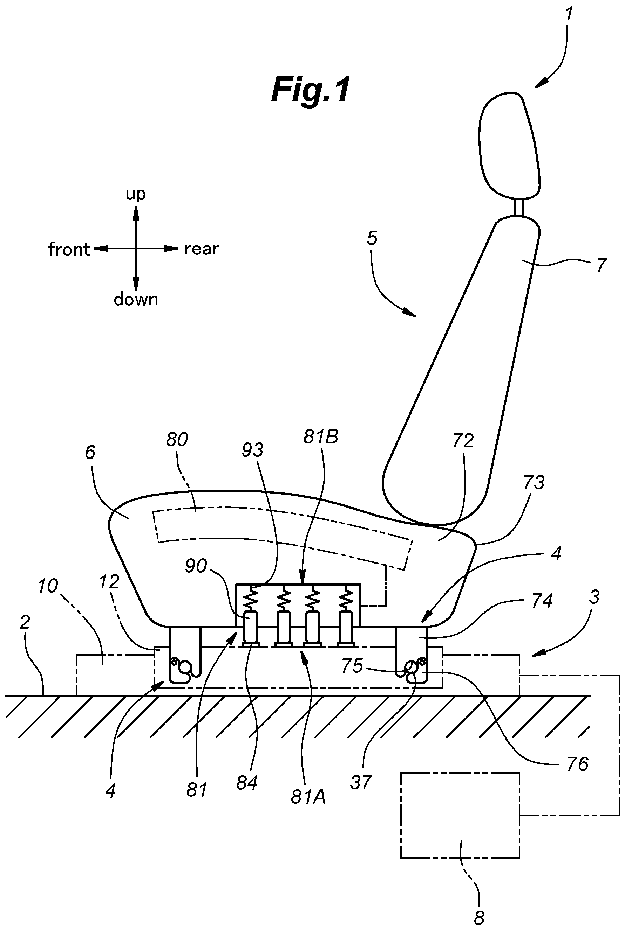

As shown in FIG. 1, the seat 1 includes a slide device 3 provided on a floor 2 of the vehicle, and a seat main body 5 detachably connected to the slide device 3 via a connecting device 4. The seat main body 5 includes a seat cushion 6 and a seat back 7 provided at the rear of the seat cushion 6. The seat cushion 6 supports the buttocks and thighs of the seated person from below. The seat back 7 supports the back of the seated person from behind.

The slide device 3 is an electric slide device, and is connected to a power source 8 provided in the vehicle. The slide device 3 supports the seat main body 5 movably with respect to the floor 2. The slide device 3 includes a lower rail 10 provided on the floor 2 and an upper rail 12 supported by the lower rail 10 in a slidable manner. The lower rail 10 and the upper rail 12 extend in the fore and aft direction. The upper rail 12 is provided above the lower rail 10. The seat main body 5 is detachably mounted to the upper rail 12 from above.

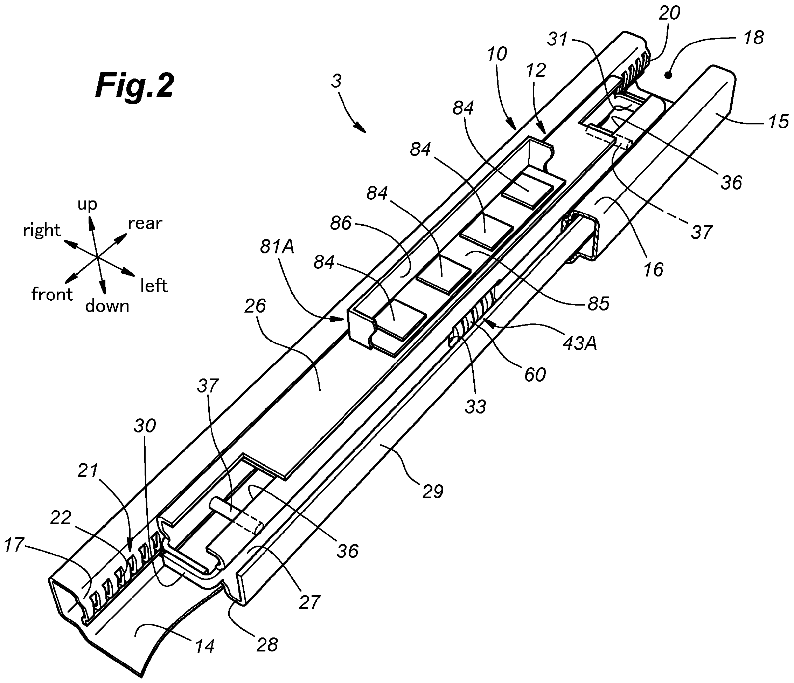

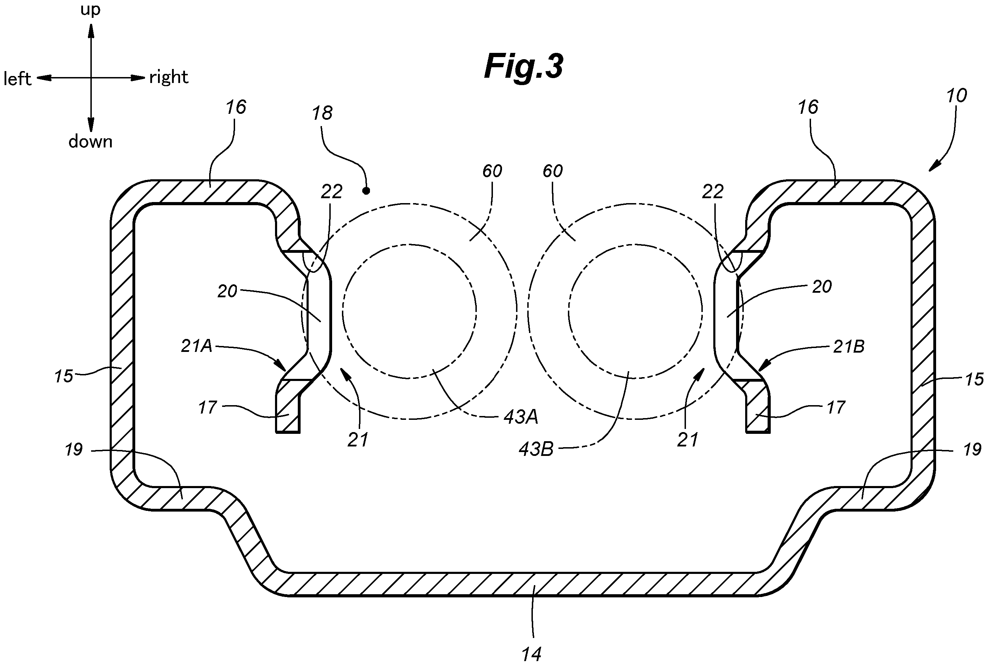

As shown in FIGS. 2 to 4, the lower rail 10 has a channel cross section. More specifically, the lower rail 10 includes a lower rail bottom wall 14 facing vertically, a left and a right lower rail outer side wall 15 facing laterally and extending upward from the left and right edges of the lower rail bottom wall 14, respectively, a left and a right lower rail top wall 16 facing vertically and extending from the upper edges of the lower rail outer side walls 15 toward each other, and a left and a right lower rail inner side wall 17 extending downward from the inner edges of the lower rail top walls 16, respectively.

The lower rail bottom wall 14, the left and right lower rail outer side walls 15, the left and right lower rail top walls 16, and the left and right lower rail inner side walls 17 each extend in the fore and aft direction. The left and right lower rail outer side walls 15 and the left and right lower rail inner side walls 17 extend in parallel to each other and perpendicularly to the lower rail bottom wall 14. The lower ends of the left and right lower rail inner side walls 17 are spaced apart from the lower rail bottom wall 14. The lower rail 10 has a lower rail opening 18 extending in the fore and aft direction in an upper part thereof. The lower rail opening 18 is defined by the left and right lower rail inner side walls 17. The left and right edge portions of the lower rail bottom wall 14 may be each provided with a raised stepped portion 19 that is raised upward. Each step portion 19 extends in the fore and aft direction, and has a flat upper surface.

The lower rail inner side walls 17 are each formed with a protrusion 20 that protrudes toward the other lower rail inner side wall 17, and extend in the fore and aft direction. The cross section of each protrusion 20 is preferably formed in an arcuate shape or a trapezoid shape. Each protrusion 20 is preferably positioned at an intermediate part in the vertical direction of the corresponding lower rail inner side wall 17. The upper and lower ends of the left and right lower rail inner side walls 17 are positioned laterally outward of the corresponding protrusions 20.

The lower rail 10 is formed with a pair of screw engagement portion 21 that extend in the fore and aft direction and engage with screw shafts 43A and 43B of the upper rail 12, which will be described later. The screw engagement portions 21 include a first screw engagement portion 21A formed on the left lower rail inner side wall 17 and a second screw engagement portion 21B formed on the right lower rail inner side wall 17. The first screw engagement portion 21A and the second screw engagement portion 21B are formed on the protrusions 20 of the corresponding lower rail inner side walls 17. The first screw engagement portion 21A and the second screw engagement portion 21B each include a plurality of engagement holes 22 arranged along the fore and aft direction in the corresponding protrusion 20.

As shown in FIGS. 2, 4, and 5, the upper rail 12 has an upper rail top wall 26 facing vertically and extending in the longitudinal direction (fore and aft direction) of the lower rail 10, and a pair of upper rail inner side walls 27 extending downward from the respective side edges of the upper rail top wall 26. The upper rail 12 is thus formed into a channel shape that opens downward by the upper rail top wall 26 and the upper rail inner side walls 27. The upper rail 12 further includes a left and a right upper rail bottom wall 28 extending laterally away from each other from the lower ends of the left and right upper rail inner side walls 27, respectively, and a left and a right upper rail outer side wall 29 extending upward from the left and right outer edges of the left and right upper rail bottom walls 28, respectively. Furthermore, the upper rail 12 is provided with an upper rail front wall 30 extending laterally and connected to the front ends of the left and right upper rail inner side walls 27, and an upper rail rear wall 31 extending laterally and connected to the rear ends of the left and right upper rail inner side walls 27.

The upper rail top wall 26, the left and right upper rail inner side walls 27, the left and right upper rail bottom walls 28, and the left and right upper rail outer side walls 29 extend in the fore and aft direction. The upper rail top wall 26 is positioned at the open end of the lower rail opening 18. The left and right upper rail inner side walls 27 are positioned between the left and right lower rail inner side walls 17. Preferably, the left and right upper rail inner side walls 27 are each provided with a recess 32 which is recessed inward with respect to the lateral direction. Each recess 32 extends in the fore and aft direction. Preferably, each recess 32 is positioned so as to oppose the protrusion 20 of the corresponding lower rail inner side wall 17. The left and right recesses 32 are each provided with an upper rail opening 33 that is passed through in the lateral direction. Each upper rail opening 33 is elongated in the fore and aft direction. Each upper rail opening 33 is provided at the center of the corresponding recess 32 with respect to the fore and aft direction. The left and right upper rail bottom walls 28 extend so as to pass between the lower rail bottom wall 14 and the corresponding lower rail inner side walls 17. The left and right upper rail outer side walls 29 are each positioned between the lower rail inner side wall 17 and the lower rail outer side walls 15 of the corresponding side.

Each upper rail outer side wall 29 rotatably supports a plurality of wheels 34. Each wheel 34 has a rotational axis extending in the lateral direction. The wheel 34 on each side is positioned on the laterally outer side of the corresponding upper rail outer side wall 29. The wheels 34 are in contact with the upper surface of the corresponding stepped portions 19 of the lower rail bottom wall 14.

The upper rail 12 is provided with a pair of receiving holes 36 for receiving the corresponding connecting devices 4. The receiving holes 36 are provided on the front and rear ends of the upper rail top wall 26, respectively. Each receiving hole 36 is passed through the upper rail top wall 26 in the thickness direction. Each receiving hole 36 extends in the fore and aft direction. The front receiving hole 36 may reach the front end of the upper rail top wall 26, and the rear receiving hole 36 may reach the rear end of the upper rail top wall 26.

The upper rail 12 is provided with a pair of strikers 37 at the respective ends thereof with respect to the fore and aft direction. Each striker 37 extends in the lateral direction. Each striker 37 is connected between the upper rail inner side walls 27 at a part corresponding to the corresponding receiving hole 36. Each striker 37 is exposed upward through the corresponding receiving hole 36. The strikers 37 can improve the rigidity of the upper rail 12.

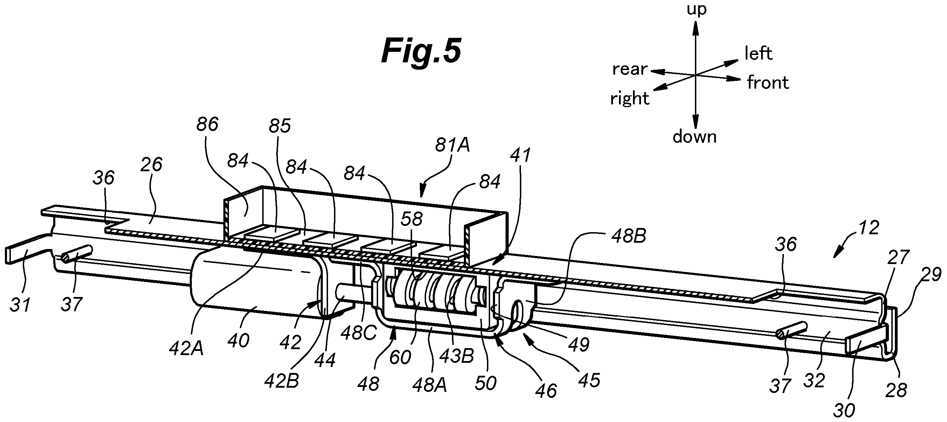

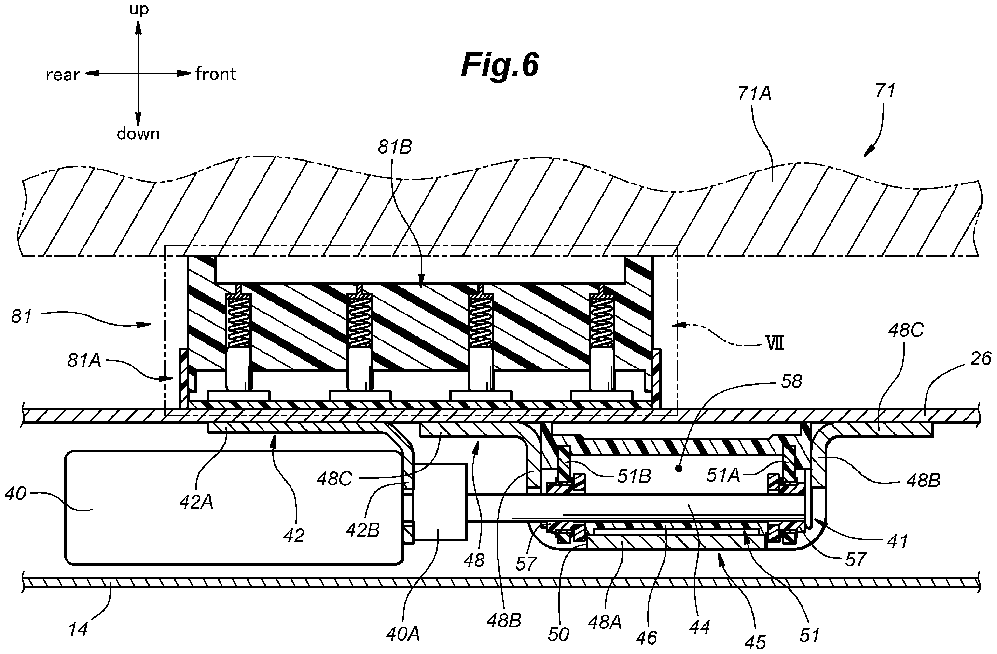

As shown in FIGS. 5 and 6, an electric motor 40 and a screw assembly 41 are supported under the upper rail top wall 26. The electric motor 40 is connected to the lower surface of the upper rail top wall 26 via a first bracket 42. The electric motor 40 is preferably formed in a cylindrical shape and extends in the fore and aft direction. The first bracket 42 includes a first top wall 42A connected to the upper rail top wall 26, and a first upright wall 42B extending downward from the first top wall 42A. The electric motor 40 is positioned under the first top wall 42A. The first upright wall 42B is connected to the front end of the electric motor 40. The electric motor 40 is provided with a rotating shaft 40A that extends forward through the first upright wall 42B.

As shown in FIGS. 5, 6 and 8, the screw assembly 41 is positioned in front of the electric motor 40. The screw assembly 41 includes a first screw shaft 43A and a second screw shaft 43B extending in the fore and aft direction, a drive shaft 44, and a support member 45 that rotatably supports the first screw shaft 43A, the second screw shaft 43B, and the drive shaft 44. In an alternate embodiment, the screw shafts 43A, 43B may consist of a single screw shaft. The support member 45 includes a gear case 46 that rotatably supports the drive shaft 44, the first screw shaft 43A and the second screw shaft 43B, and a second bracket 48 that is attached to the lower surface of the upper rail top wall 26 and supports the gear case 46.

The second bracket 48 includes a bottom wall 48A facing vertically and extending in the fore and aft direction, a front and a rear second upright wall 48B extending upward from the front and rear ends of the bottom wall 48A, respectively, and a front and a rear second top wall 48C extending from the upper ends of the front and rear second upright walls 48B, respectively, in the fore and aft direction away from each other. The second top walls 48C each have a surface facing in the vertical direction and are connected to the lower surface of the upper rail top wall 26. Owing to the bottom wall 48A, the second bracket 48 defines a closed cross section structure in cooperation with the upper rail top wall 26. Each second upright wall 48B is provided with a pair of projecting walls 49 on either side edge thereof. The lateral side edges of each projecting wall 49 project laterally outward from the corresponding side edges of the second upright wall 48B. The outer edges of the projecting walls 49 are in contact with the inner surfaces of the corresponding upper rail inner side wall 27. As a result, the first brackets 42 are in contact with the corresponding upper rail inner side walls 27, so that the rigidity of the upper rail 12 is improved. The first upright wall 42B on the rear side is formed with a through hole 50 that is passed through in the fore and aft direction.

The gear case 46 is formed in the shape of a rectangular parallelepiped box that is elongated in the fore and aft direction. The gear case 46 is positioned between the bottom wall 48A and the upper rail top wall 26. The gear case 46 includes a box-shaped outer case 51 forming an outer shell, and a front support member 51A and a rear support member 51B supported by the front and rear ends of the outer case 51, respectively. The front support member 51A and the rear support member 51B are provided with a front and a rear first bearing portion 55, respectively, that rotatably support the first screw shaft 43A, a front and a rear second bearing portion 56 that rotatably support the second screw shaft 43B, and a front and a rear third bearing portion 57 that rotatably support the drive shaft 44. The outer case 51 is provided with a pair of gear case openings 58 that expose the corresponding screw shafts 43A and 43B. The gear case openings 58 overlap with the upper rail openings 33 when viewed from the side.

The first screw shaft 43A and the second screw shaft 43B extend in the fore and aft direction within the gear case 46. The first screw shaft 43A and the second screw shaft 43B are arranged laterally one next to the other and in parallel to each other. The front end and rear end of the first screw shaft 43A are supported by the corresponding first bearing portions 55. The front end and rear end of the second screw shaft 43B are supported by the corresponding second bearing portions 56. The first screw shaft 43A and the second screw shaft 43B are provided with threads 60. The thread 60 is provided on the outer peripheral surface of a central part of each screw shaft 43A, 43B along the fore and aft direction. The first screw shaft 43A is exposed from the gear case opening 58 on the left side. The left part of the thread 60 of the first screw shaft 43A passes through the corresponding gear case opening 58 and projects to the left. The second screw shaft 43B is exposed from the gear case opening 58 on the right side. The right part of the thread 60 of the second screw shaft 43B passes through the corresponding gear case opening 58 and projects to the right.

The drive shaft 44 extends in the fore and aft direction. The drive shaft 44 is positioned below the intermediate point between the first screw shaft 43A and the second screw shaft 43B. A rear end of the drive shaft 44 is connected to the rotating shaft 40A of the electric motor 40. The drive shaft 44 and the rotating shaft 40A of the electric motor 40 are arranged on the same straight line. The front end of the drive shaft 44 passes through the through hole 50 provided in the first upright wall 42B and is supported by the third bearing portion 57.

A drive gear 62 is provided at the front end of the drive shaft 44. The rear end of the first screw shaft 43A is fitted with a first gear 63 that meshes with the drive gear 62. The rear end of the second screw shaft 43B is fitted with a second gear 64 that meshes with the drive gear 62. The drive gear 62, the first gear 63, and the second gear 64 may consist of spur gears.

When the upper rail 12 is mounted to the lower rail 10, the left part of the thread 60 of the first screw shaft 43A, that passes through the gear case opening 58 and projects, passes through the upper rail opening 33 and meshes with the engagement holes 22 of the first screw engagement portion 21A which is formed on the left lower rail inner side wall 17. Similarly, the right part of the thread 60 of the second screw shaft 43B, that passes through the gear case opening 58 and projects, passes through the upper rail opening 33 and meshes with the engagement holes 22 of the second screw engagement portion 21B formed on the right lower rail inner side wall 17.

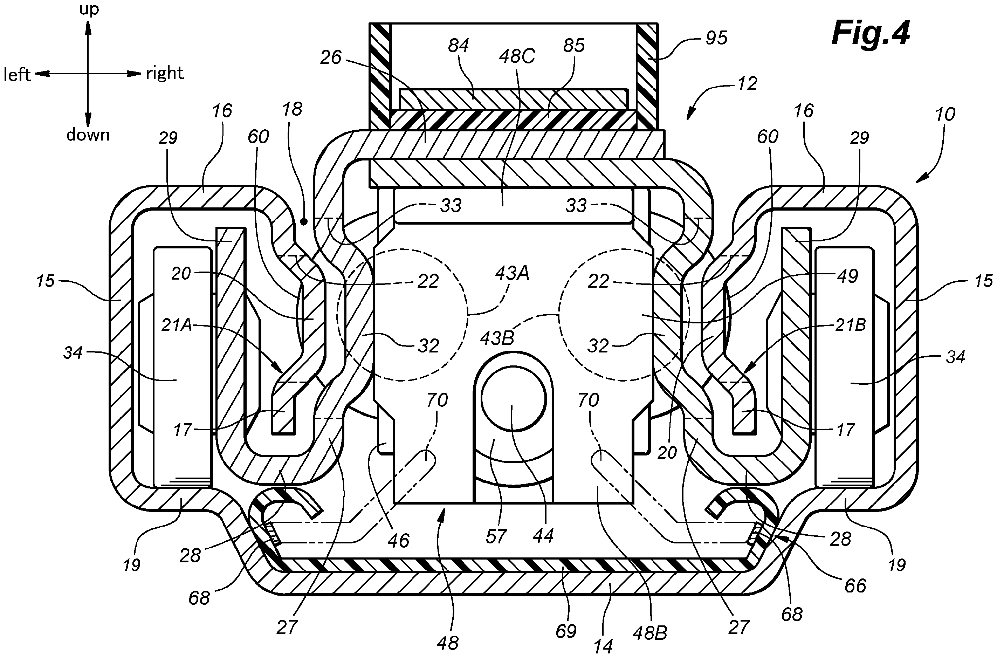

As shown in FIG. 4, the seat 1 includes a power supply device 66 for supplying power to the electric motor 40. The power supply device 66 includes, for example, a pair of conductive strips 68 that extend in the fore and aft direction inside the lower rail 10 and are connected to the power source 8, an electrically insulating plate 69 provided between the lower rail 10 and the conductive strips 68, and a pair of conductive contact terminals 70 provided in the electric motor 40 and in sliding contact with the corresponding conductive strips 68.

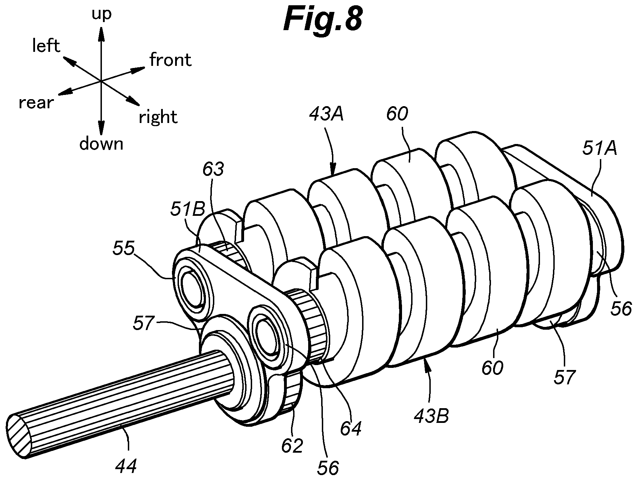

As shown in FIG. 8, the rotation of the electric motor 40 is transmitted to the first screw shaft 43A and the second screw shaft 43B via the rotating shaft 40A, the drive shaft 44, the drive gear 62, the first gear 63, and the second gear 64. Rotation of the first screw shaft 43A and the second screw shaft 43B causes the first screw shaft 43A and the second screw shaft 43B to move in the fore and aft direction with respect to the first screw engagement portion 21A and the second screw engagement portion 21B. As a result, the upper rail 12 moves in the fore and aft direction with respect to the lower rail 10.

Referring to FIG. 1 once again, the seat cushion 6 includes a frame 71 (see FIG. 6) forming a skeletal structure, a pad 72 supported by the frame 71, and a skin material 73 covering the outer surface of the pad 72. The frame 71 includes a left and a right side member 71A extending in the fore and aft direction.

The seat cushion 6 is provided with a plurality of connecting devices 4 that can detachably connect the seat cushion 6 to the upper rail 12. In particular, a pair of connecting devices 4 are provided for each upper rail 12 so as to correspond to the pair of strikers 37 provided on the upper rail 12. Further, the connecting devices 4 are provided for each of the left and right upper rails 12. The connecting devices 4 are preferably provided at the front and rear ends of the left and right side members 71A. Each connecting device 4 consists of a latch that can be attached to and detached from the corresponding striker 37. Each connecting device 4 includes a base 74 extending downward from the side member 71A, a slot 75 formed at the lower end of the base 74, a hook 76 rotatably supported by the base 74 so as to be rotatable between a release position where the hook 76 is received in the slot 75 and a lock position where the hook 76 is displaced from the slot 75, a biasing member (not shown in the drawings) biasing the hook 76 toward the lock position, and a control cable (not shown in the drawings) that can pull the hook 76 to the release position against the biasing force of the biasing member.

The pair of connecting devices 4 for each upper rail 12 pass through the corresponding receiving holes 36 and are connected to corresponding strikers 37. When the lower end of the base 74 of each connecting device 4 enters the corresponding receiving hole 36, the striker 37 projects into the slot 75. At this time, the striker 37 preferably pushes aside the hook 76 and advances into the slot 75. In an alternate embodiment, a mechanism may be provided to maintain the hook 76 in the release position. When the striker 37 reaches the bottom of the slot 75, the hook 76 biased by the biasing member returns to the lock position, and the hook 76 locks the striker 37. Thereby, the connecting device 4 is connected to the upper rail 12. The user can move the hook 76 to the release position by operating the control cable. Thereby, the striker 37 can be removed from the slot 75, and the connecting member and the seat main body 5 can be separated from the upper rail 12.

The seat main body 5 is provided with an electric device 80. The electric device 80 may include a seat heater, an air blower, an electric reclining device, and various sensors such as a seating sensor.

The electric device 80 is electrically connected to the power source 8 via a connector 81. The connector 81 includes a rail-side connector 81A provided on the upper surface of the upper rail 12 and connected to the power source 8, and a seat-side connector 81B provided on the lower surface of the seat main body 5 and connected to the electric device 80.

As shown in FIGS. 2, 5, and 6, the rail-side connector 81A is positioned between the pair of strikers 37. The rail-side connector 81A has a plurality of conductive plates 84 arranged on the upper surface of the upper rail 12 along the longitudinal direction thereof. The surface of each conductive plate 84 faces in the vertical direction. An electrically insulating base plate 85 is provided on the upper surface of the upper rail top wall 26. The conductive plates 84 are provided on the base plate 85. Although four conductive plates 84 are provided on the upper rail top wall 26 in this embodiment, the number of the conductive plates 84 is not particularly limited to this. When viewed from above, the four conductive plates 84 are arranged so as to overlap the electric motor 40 or the screw assembly 41. Thereby, the rail-side connector 81A, the screw shafts 43A and 43B, and the electric motor 40 can be arranged on the upper rail 12 with good space efficiency. The conductive plates 84 are preferably connected to the contact terminals 70 via a wire harness (not shown in the drawings).

An electrically insulating lower partition wall 86 is provided on the upper rail 12 so as to surround the plurality of conductive plates 84. The lower partition wall 86 is preferably provided on the base plate 85. Preferably, the lower partition wall 86 protrudes upward from the upper surface of the base plate 85 and extends along the side edge of the base plate 85. The conductive plates 84 are thus disposed inside the lower partition wall 86.

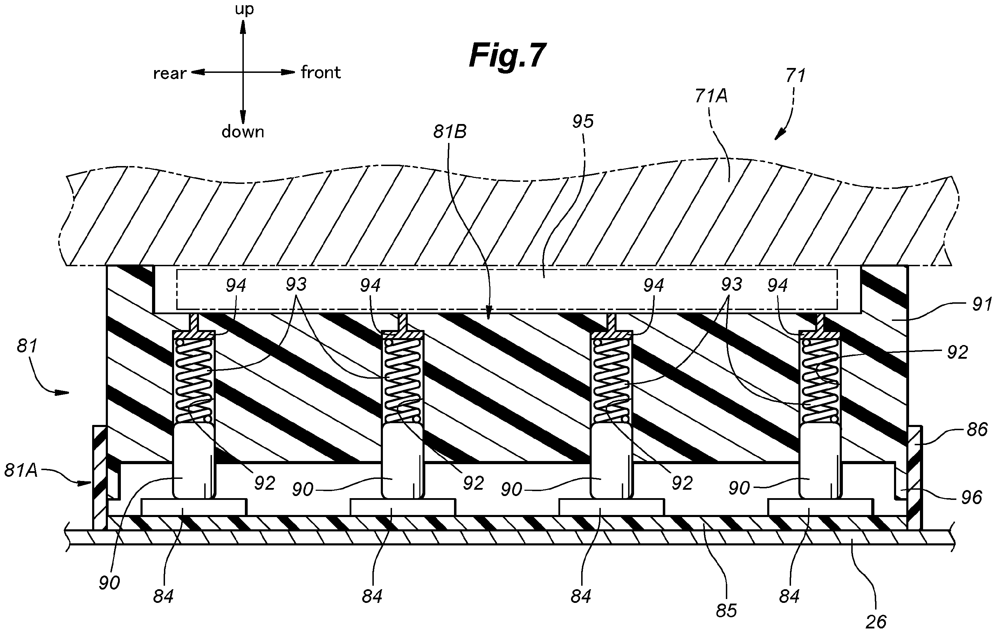

As shown in FIGS. 6 and 7, the seat-side connector 81B is provided with a plurality of conductive probes 90 that abut against the corresponding conductive plates 84. Further, the seat-side connector 81B is provided with a housing 91 for supporting the conductive probes 90. The upper surface of the housing 91 is connected to the lower surface of the side member 71A. The housing 91 has a rectangular parallelepiped shape that is elongated in the fore and aft direction. The lower surface of the housing 91 opposes the conductive plates 84. The housing 91 is made of an electrically insulating material. The housing 91 is formed with a plurality of recesses 92 that are recessed upward from the lower surface of the housing 91. Each recess 92 is provided at a position opposing the corresponding conductive plate 84. Each conductive probe 90 is slidably inserted into the corresponding recess 92. Each conductive probe 90 extends in the vertical direction. The lower end of each conductive probe 90 projects downward from the lower surface of the housing 91.

A biasing member 93 is provided between each conductive probe 90 and the bottom of the corresponding recess 92 to bias the conductive probe 90 in a direction to protrude from the recess 92. The housing 91 is provided with a plurality of terminals 94 electrically connected to the corresponding conductive probes 90. One end of each terminal 94 may be disposed within the recess and may be in sliding contact with the corresponding conductive probe 90. Further, one end of each terminal 94 may be in contact with the corresponding conductive probe 90 via the corresponding biasing member 93. The other end of each terminal 94 is exposed on the outer surface of the housing 91. The other end of each terminal 94 is connected to a wire harness 95 extending from the electric device 80.

The seat-side connector 81B further includes an electrically insulating upper partition wall 96 surrounding the plurality of conductive probes 90. The upper partition wall 96 may be integrally formed with the housing 91. The upper partition wall 96 preferably projects downward from the lower surface of the housing 91 and extends along the side edge of the housing 91. The recesses 92 are thus surrounded by the upper partition wall 96.

Each biasing member 93 extends in the vertical direction. The upper end of the biasing member 93 is connected to the bottom of the corresponding recess 92. The lower end of the biasing member 93 is located above the opening of the recess 92. The biasing member 93 may be a coil spring, for example.

Each conductive probe 90 extends in the vertical direction. The upper end of conductive probe 90 is connected to the lower end of biasing member 93. The upper end of the conductive probe 90 is inserted into the corresponding recess 92. The lower end of the conductive probe 90 protrudes from the recess 92. When viewed from above, the area of the lower end of the conductive probe 90 is smaller than the area of the conductive plate 84.

When the seat main body 5 is attached to the upper rail 12, or when the connecting device 4 is connected to the corresponding striker 37, the lower ends of the conductive probes 90 contact the upper surfaces of the corresponding conductive plates 84. This electrically connects the rail-side connector 81A and the seat-side connector 81B to each other. At this time, each conductive probe 90 is displaced upward against the biasing force of the biasing member 93 while contacting the corresponding conductive plate 84. Therefore, the biasing member 93 biases the conductive probe 90 toward the rail-side connector 81A. Thereby, the seat-side connector 81B and the rail-side connector 81A are connected in a reliable manner.

When the seat main body 5 is attached to the upper rail 12, the upper partition wall 96 preferably cooperates with the lower partition wall 86 to form a closed structure. Since the lower partition wall 86 and the upper partition wall 96 conceal the connecting portion between the rail-side connector 81A and the seat-side connector 81B, foreign objects are prevented from coming into contact with the connecting portion.

The method for manufacturing the seat 1 configured as described above will be discussed in the following. The seat main body 5, the slide device 3, the seat-side connector 81B, the electric device 80, and the rail-side connector 81A are separately prepared.

The method for manufacturing the seat-side connector 81B will be discussed. First, the housing 91 is prepared. The housing 91 is preferably formed by injection molding or the like. The recesses 92 and the upper partition wall 96 are preferably formed when molding the housing 91. The terminals 94 are preferably placed in the housing 91 by insert molding, for example. A conductive probe 90 is inserted and supported in each recess 32 with a biasing member 93 placed therein in advance.

The seat-side connector 81B is preferably attached to the frame 71. More specifically, the housing 91 may be attached to the lower surface of one of the side members 71A. The housing 91 is preferably fastened to the side member 71A using screws or the like. The electric device 80 is attached to the seat cushion 6. The electric device 80 may also be attached to the seat back 7. Next, the electric device 80 is connected to the terminals 94 of the seat-side connector 81B via the wire harness 95.

The lower rail 10 is preferably formed by stamp forming sheet metal. The engagement holes 22 are preferably formed in the sheet metal before stamp forming. Following the stamp forming process, the electrically insulating plate 69 and the conductive strips 68 may be attached to the lower rail bottom wall 14.

The upper rail 12 is preferably formed by fastening two pieces of stamp formed sheet metal. The receiving holes 36 and the upper rail opening 33 are preferably formed at the same time as stamp forming the sheet metal. Next, the front and rear strikers 37 are connected to the left and right upper rail inner side walls 27. Next, the wheels 34 are mounted to the left and right outer sides of the upper rail outer side wall 29.

The electric motor 40 and the screw assembly 41 are attached under the upper rail top wall 26. The electric motor 40 is attached to the upper rail top wall 26 via the first bracket 42. The screw assembly 41 is attached to the upper rail top wall 26 via the second bracket 48. Each bracket 42, 48 may be fastened to the upper rail top wall 26 by screws or the like. Further, the contact terminals 70 are attached to the upper rail 12. The contact terminals 70 are connected to the electric motor 40 via the wire harness.

The upper rail 12 is mounted to the lower rail 10. More specifically, the upper rail 12 may be inserted from the front end or the rear end of the lower rail 10. At this time, the wheels 34 provided on the upper rail 12 and the upper rail outer side wall 29 on each side are inserted between the lower rail outer side wall 15 and the lower rail inner side wall 17 on the corresponding side.

The rail-side connector 81A may be formed by attaching the plurality of conductive plates 84 to the molded base plate 85. The lower partition wall 86 is preferably formed integrally with the base plate 85 during molding.

The rail-side connector 81A is attached to the upper rail top wall 26. The base plate 85 is preferably fastened to the upper rail top wall 26 with screws or the like. The conductive plates 84 are connected to the contact terminals 70 via a wire harness. The slide device 3 is thus formed by the above steps.

The slide device 3 is attached to the floor 2 of the vehicle. More specifically, the lower rail 10 is connected to the floor 2. The floor 2 may be provided with a groove extending in the fore and aft direction. The lower surface of the lower rail bottom wall 14 may be connected to the bottom surface of the groove. Thereby, the upper surface of the upper rail top wall 26 may be placed on the same plane as the floor 2. The conductive strips 68 provided on the lower rail 10 are connected to the power source 8.

The seat main body 5 is attached to the slide device 3. More specifically, the connecting devices 4 provided in the seat main body 5 passe through the corresponding receiving holes 36 provided in the upper rail 12 from above to below, and are connected to the corresponding strikers 37. Thereby, the seat main body 5 is attached to the vehicle in such a manner that the gap between the seat main body 5 and the floor 2 is minimized.

As described above, when the seat main body 5 is connected to the upper rail 12, the rail-side connector 81A and the seat-side connector 81B are electrically connected. Therefore, the operator does not need to separately perform the work of connecting the electric device 80 to the power source 8. Therefore, in the seat 1 in which the seat main body 5 can be attached to and detached from the upper rail 12, the work of attaching and detaching the seat main body 5 can be facilitated.

Since the rail-side connector 81A and the seat-side connector 81B are positioned between the pair of strikers 37 and the pair of connecting devices 4 that are connected to each other, the rail-side connector 81A and the seat-side connector 81B can be reliably connected.

When viewed from above, the area of the lower end of each conductive probe 90 is smaller than the area of the corresponding conductive plate 84. Therefore, when viewed from above, the area of each conductive plate 84 is larger than the area of the corresponding contact portion of the conductive probe 90 (see FIG. 7). Therefore, even if there are manufacturing errors in the various component members, the seat-side connector 81B and the rail-side connector can be reliably connected to each other.

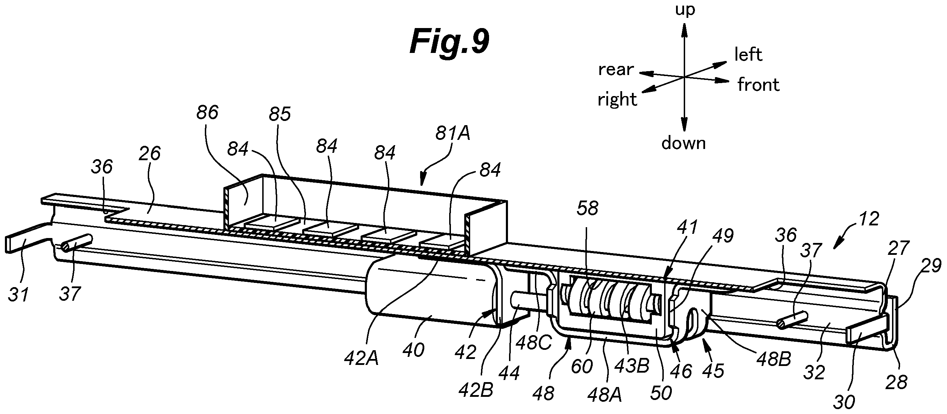

Although the description of the specific embodiments has been completed above, the present invention is not limited to the above-mentioned embodiments and can be widely modified and implemented in different ways. In the foregoing embodiment, the four conductive plates 84 were arranged so as to overlap with the electric motor 40 or the screw assembly 41, but as shown in FIG. 9, a part of the four conductive plates 84 may be provided to the rear of the electric motor 40. Furthermore, the shape of the seat-side connector 81B may be freely selected. For instance, the housing 91 may be segmented into different parts so as to correspond to the plurality of conductive probes 90. Further, the seat-side connector 81B may be constituted by so-called pogo pins. Furthermore, the conductive probe 90 and the biasing member 93 may be replaced with a conductive sheet spring.

**REFERENCE NUMERALS**

| | | | |
|---|---|---|---|
| 1: | seat (vehicle seat) | 2: | floor |
| 3: | slide device | 4: | connecting device |
| 5: | seat main body | 8: | power supply |
| 10: | lower rail | 12: | upper rail |
| 22: | engagement hole | 26: | upper rail top wall (top wall) |
| 27: | upper rail inner side wall (side wall) | 36: | receiving hole |
| 37: | striker | 40: | electric motor |
| 43a: | first screw shaft (screw shaft) | 43b: | second screw shaft (screw shaft) |
| 80: | electric device | 81a: | rail-side connector |
| 81b: | seat-side connector | 84: | conductive plate |
| 86: | lower partition wall | 90: | conductive probe |
| 93: | biasing member | 96: | upper partition wall |

## Claims

1. A vehicle seat, comprising:
a slide device including a lower rail provided on a floor and an upper rail slidably supported by the lower rail;
a seat main body removably connected to the slide device via a connecting device;
an electric device provided on the seat main body;
a rail-side connector provided on an upper surface of the upper rail and connected to a power source; and
a seat-side connector provided on a lower surface of the seat main body and connected to the electric device,
the rail-side connector and the seat-side connector being configured to be electrically connected to each other when the seat main body is connected to the upper rail.

2. The vehicle seat according to claim 1, wherein the upper rail is provided with a pair of strikers at either end in a longitudinal direction thereof, and the connecting device is provided as a pair so as to correspond to the strikers, the rail-side connector being positioned between the strikers, the seat-side connector being positioned between the connecting devices.

3. The vehicle seat according to claim 2, wherein the rail-side connector includes a plurality of electrically conductive plates arranged in the longitudinal direction on an upper surface of the upper rail, and the seat-side connector is provided with a plurality of conductive probes so as to contact the corresponding conductive plates.

4. The vehicle seat according to claim 3, wherein the seat-side connector is provided with a plurality of biasing members that bias the conductive probes toward the rail-side connector.

5. The vehicle seat according to claim 3, wherein each conductive plate has an area which is larger than an area of a contact portion of the corresponding conductive probe when viewed from above.

6. The vehicle seat according to claim 3, wherein the upper rail is provided with a top wall facing vertically and extending in the longitudinal direction thereof, and a pair of side walls that extend downward from either side edge of the top wall,
a screw shaft is rotatably supported under the top wall,
an electric motor for rotating the screw shaft is supported under the top wall,
a plurality of engagement holes meshing with the screw shaft are formed in the lower rail along a longitudinal direction thereof, and
at least one of the conductive plates is positioned so as to overlap with at least one of the screw shaft and the electric motor when viewed from above.

7. The vehicle seat according to claim 6, wherein each striker is connected to both of the side walls, and the top wall is provided with a pair of receiving holes so as to correspond to the strikers, respectively, so that each connecting device can be connected to the corresponding striker by passing through the corresponding receiving hole.

8. The vehicle seat according to claim 3, wherein the upper rail is provided with an electrically insulating lower partition wall so as to surround the rail-side connector.

9. The vehicle seat according to claim 3, wherein the seat-side connector is provided with an electrically insulating upper partition wall surrounding the conductive probes.

10. The vehicle seat according to claim 6, wherein a support member that supports the screw shaft is connected to a lower surface of the top wall, and the support member is in contact with the side walls.
